# EUROPÄISCHE PATENTANMELDUNG

(11) **EP 2 610 652 A2**
(43) Veröffentlichungstag der Anmeldung: **03.07.2013**
(21) Anmeldenummer: 12008465.2
(22) Anmeldetag: 20.12.2012
(51) Int. Cl.: G02B 5/08

(54) **Reflektierendes optisches Bauteil**

(30) Priorität: 28.12.2011 DE 102011122329
(71) Anmelder: Qioptiq Photonics GmbH & Co. KG, 37081 Göttingen (DE)
(72) Erfinder: Bischoff, Martin, 37120 Bovenden (DE); Mewes, Stefan, 37120 Bovenden (DE)
(74) Vertreter: Wagner, Carsten

(57) **Zusammenfassung**

Ein für einen Wellenlängenbereich von 0,4 - 12 µm ausgelegtes reflektierendes optisches Bauteil weist ein Substrat 4, eine die freie Oberfläche des Bauteils bildende Schutzschicht 10 und eine zwischen dem Substrat 4 und der Schutzschicht 10 angeordnete Metallschicht 8 auf, wobei die Metallschicht aus Al und/oder Au und/oder Ag besteht und wobei die Schutzschicht 10 eine hohe Packungsdichte ≥ 0,95 aufweist.

## Beschreibung

Die Erfindung betrifft ein für einen Wellenbereich von 0,4 - 12 µm ausgelegtes reflektierendes optisches Bauteil.

Reflektierende optische Bauteile sind, beispielsweise in Form von Spiegeln, in verschiedenen Ausführungsformen und für verschiedene Anwendungen bekannt. Sie weisen ein Substrat auf, auf das eine in einem gewünschten Wellenlängenbereich reflektierende Metallschicht aufgebracht ist. Um die reflektierende Metallschicht vor Umwelteinflüssen zu schützen, ist auf die Metallschicht eine Schutzschicht aufgebracht. Hierbei sind Bauteile realisiert worden, die eine in gewünschtem Maße hohe Reflexion aufweisen. Es hat sich jedoch gezeigt, dass die Stabilität einer solchen Beschichtung gegenüber Umwelteinflüssen unzureichend ist. Beispielsweise führt der sogenannte Tape-Test häufig zu einem Ablösen der Schicht, während ein Abriebtest zu Kratzern in der Metallschicht führt, die die Reflexionseigenschaften der Metallschicht beeinträchtigen. Werden die Bauteile feuchter Wärme oder einer Wasserlagerung ausgesetzt, so führt dies häufig zu einem Unterlaufen bzw. Anlaufen der Beschichtung, wodurch das Bauteil häufig unbrauchbar wird.

Bei Bauteilen, bei denen die Schutzschicht so gestaltet ist, dass eine hohe Stabilität gegenüber Umwelteinflüssen erreicht ist, sind häufig die Reflexionseigenschaften des Bauteiles beeinträchtigt. Die vorgenannten Probleme treten insbesondere, jedoch nicht ausschließlich bei Silber- und Goldschichten auf. Als besonders kritisch haben sich diamantgedrehte oder -gefräste Substrate, beispielsweise aus Aluminium oder Kupfer, erwiesen.

Durch DE 10 2007 054 731 A1 ist ein für eine Wellenlänge von 193 nm ausgelegtes reflektierendes optisches Bauteil bekannt, das ein in der Druckschrift als Basismaterial bezeichnetes Substrat, eine auf dem Substrat angeordnete reflektierende Metallschicht und ein auf der Metallschicht angeordnetes Schichtensystem aus dielektrischen Schichten unterschiedlicher Schichtmaterialien aufweist. Dabei weist das Basismaterial einen höheren Schmelzpunkt als Aluminium auf. Das Schichtensystem aus dielektrischen Schichten unterschiedlicher Schichtmaterialien zielt auf eine Erhöhung der Reflexion bei der Betriebswellenlänge von 193 nm ab. In dem Schichtensystem werden insbesondere Schichten aus Al₂O₃, AlF₃ und LaF₃ verwendet. Zwischen Al₂O₃ und AlF₃ besteht eine relativ hohe Brechzahldifferenz, wobei Al₂O₃ eine hohe Brechzahl aufweist und leicht absorbiert. AlF₃ ist niedrig brechend und bei der Betriebswellenlänge in gewissem Maße absorbierend. Die Schichten aus LaF₃ weisen eine relativ hohe Rauigkeit auf, die dadurch geglättet werden kann, dass auf der Schicht aus LaF₃ eine Schicht aus Al₂O₃ angeordnet ist. Die in dem Schichtensystem und damit unter der freien Oberfläche des Bauteiles angeordneten Schichten aus Al₂O₃ können verdichtet werden.

Durch WO 03 / 009432 A2 ist ein Strahlformungsinstrument für optische Strahlung, insbesondere UV-Laserstrahlung bekannt.

US 2009 / 0220802 A1 zeigt und beschreibt ein hochreflektierendes Schichtensystem zur Beschichtung von Substraten, wobei das Schichtensystem insbesondere reflektierende und dielektrische Schichten aufweisen kann.

Der Erfindung liegt die Aufgabe zugrunde, ein für einen Wellenbereich von 0,4 - 12 µm ausgelegtes reflektierendes optisches Bauteil anzugeben, das eine hohe Stabilität gegenüber Umwelteinflüssen und gute Reflexionseigenschaften aufweist.

Diese Aufgabe wird durch die im Anspruch 1 angegebene Erfindung gelöst.

Die Erfindung sieht vor, dass die die freie Außenfläche bzw. Oberfläche des Bauteiles bildende Schutzschicht eine hohe Packungsdichte von ≥ 0,95 aufweist. Es hat sich überraschend gezeigt, dass sich auf dieser Grundlage sowohl ein hohes Reflexionsvermögen als auch eine hohe Stabilität gegenüber Umwelteinflüssen erreichen lässt.

Das erfindungsgemäße Bauteil weist eine ausgezeichnete Stabilität gegenüber Umwelteinflüssen auf, insbesondere im Hinblick auf die Haftfestigkeit der Metallschicht sowie die Stabilität gegenüber feuchter Wärme, Temperaturwechsel und Wasserlagerung sowie im Hinblick auf die Kratzfestigkeit, beispielsweise gegenüber Abrieb mit einem Baumwolltuch oder sogar einem Radiergummi.

Erfindungsgemäße Bauteile können insbesondere auch unter Verwendung diamantgedrehter oder -gefräster Substrate realisiert werden, die sich im Stand der Technik als besonders kritisch erwiesen haben. Ein weiterer Vorteil eines erfindungsgemäßen Bauteiles besteht darin, dass es eine hohe Reflexion über einen breiten Spektralbereich im Wellenlängenbereich von 0,4 - 12 µm und für große Einfallswinkelbereiche aufweist. Unter einer Auslegung für einen Wellenlängenbereich von 0,4 - 12 µm wird erfindungsgemäß verstanden, dass das Bauteil für einen Betrieb bei einer Betriebswellenlänge ausgelegt ist, die in dem Wellenlängenbereich von 0,4 - 12 µm liegt.

Im Ergebnis ist durch die Erfindung somit gleichzeitig eine hohe Stabilität gegenüber Umwelteinflüssen und eine hohe Reflexion erzielbar.

Um die sich erfindungsgemäß ergebenden vorteilhaften Eigenschaften weiter zu verbessern, sieht eine vorteilhafte Weiterbildung der Erfindung vor, dass die Packungsdichte der Schutzschicht ≥ 0,98 ist.

Eine andere vorteilhafte Weiterbildung der Erfindung sieht vor, dass die Schutzschicht aus dielektrischem Material besteht. Als besonders vorteilhaft hat sich erwiesen, dass die Schutzschicht aus oxidischem und/oder fluoridischem Material besteht oder oxidisches und/oder fluoridisches Material enthält, wie dies eine andere vorteilhafte Weiterbildung der Erfindung vorsieht. Die Verwendung entsprechender Materialien bzw. Mischmaterialien gewährleistet eine ausgezeichnete Oberflächenhärte der Schutzschicht.

Bei der vorgenannten Ausführungsform kann das oxidische Material CeO₂ und/oder Ce₂O₃ und/oder Cr₂O₃ und/oder Y₂O₃ und/oder Ta₂O₅ und/oder TiO₂ sein, wie dies eine Weiterbildung der vorgenannten Ausführungsform vorsieht.

Eine Weiterbildung der Ausführungsform, bei der die Schutzschicht fluoridisches Material ist oder enthält, sieht vor, dass das fluoridische Material YF₃ und/oder LiF und/oder YbF₃ und/oder BaF₂, LaF₃ ist oder enthält.

Erfindungsgemäß kann die Schutzschicht durch eine einzelne Schicht eines Materiales oder eines Mischmateriales gebildet sein. Es ist erfindungsgemäß jedoch auch möglich, dass die Schutzschicht als Schutzschichtsystem ausgebildet ist, das zwei oder mehrere übereinander angeordnete Schichten enthält, von denen jede aus einem einzelnen Material oder einem Mischmaterial bestehen kann. Erfindungsgemäß wird unter einer Schutzschicht also auch ein Schutzschichtsystem verstanden, das aus wenigstens zwei Schutzschichten besteht. Die Schichtdicke der Schutzschicht (bzw. des Schutzschichtsystems) beträgt vorzugsweise 50-500 nm, wie dies eine andere vorteilhafte Weiterbildung der Erfindung vorsieht. Die Erfindung bietet somit insbesondere auch die Möglichkeit, Schutzschichten zu realisieren, die aufgrund ihrer geringen Dicke einen nur geringen Einfluss auf die Reflexionseigenschaften des Bauteiles haben, gleichzeitig jedoch eine hohe Stabilität gegenüber Umwelteinflüssen gewährleisten.

Die Schutzschicht bzw. das Schutzschichtsystem kann auf beliebige geeignete Weise aufgebracht werden. Insoweit sieht eine vorteilhafte Weiterbildung der Erfindung vor, dass die Schutzschicht aufgedampft ist, vorzugsweise mit Plasmastützung. Es hat sich gezeigt, dass sich auf diese Weise die Packungsdichte der Schutzschicht bzw. des Schutzschichtsystems noch weiter erhöhen lässt.

Erfindungsgemäß kann die Metallschicht unmittelbar auf das Substrat aufgebracht werden. Um die Stabilität gegenüber Umwelteinflüssen noch weiter zu verbessern, sieht eine andere vorteilhafte Weiterbildung der Erfindung vor, dass zwischen der Metallschicht und dem Substrat wenigstens eine Haftvermittlerschicht angeordnet ist.

Eine Weiterbildung der vorgenannten Ausführungsform sieht vor, dass die Haftvermittlerschicht wenigstens ein metallisches und/oder wenigstens ein oxidisches Material enthält oder aus metallischem und/oder oxidischem Material besteht.

Bei der vorgenannten Ausführungsform kann das metallische Material vorzugsweise Ni, Cr oder eine Ni-Cr-Mischung sein, wie dies eine Weiterbildung vorsieht. Soweit die Haftvermittlerschicht ein oxidisches Material aufweist, so kann dieses vorzugsweise Chromoxid CrₓO_{y} und/oder MgO und/oder SiO und/oder ZrO₂ und/oder Y₂O₃ sein.

Andere Weiterbildungen der Erfindung sehen vor, dass die Schichtdicke der Metallschicht ≥ 30 nm ist und/oder dass die Schichtdicke der Metallschicht ≤ 200 nm ist. Eine Schichtdicke von mindestens 30 nm ist im Sinne einer hohen Reflexion im IR-Bereich vorteilhaft, während Schichtdicken von deutlich mehr als 200 nm aus wirtschaftlichen Gründen als nicht sinnvoll erscheinen. Erfindungsgemäß kann die Metallschicht aus Gold, Silber, Aluminium oder einem anderen geeigneten Metall bestehen.

Grundsätzlich können die Schichten auf beliebige geeignete Weise auf das Substrat bzw. eine vorhergehende Schicht aufgebracht werden. Eine außerordentlich vorteilhafte Weiterbildung der Erfindung sieht vor, dass die Schutzschicht bzw. das Schutzschichtsystem durch Aufdampfen, vorzugsweise mit Plasmastützung, durch Ionenplattieren oder durch Sputtern aufebracht ist. Zum Gegenstand der Erfindung gehört auch ein Verfahren zur Herstellung eines reflektierenden optischen Bauteiles, das ein Substrat, eine Schutzschicht und eine zwischen dem Substrat und der Schutzschicht angeordnete Metallschicht aufweist, wobei bei dem erfindungsgemäßen Verfahren die Schutzschicht durch Aufdampfen, vorzugsweise mit Plasmastützung, die auch als Ionenstützung (IAD - Ion-Assisted Deposition) bezeichnet wird, durch Ionenplattieren oder durch Sputtern aufgebracht wird. Insbesondere kann bei dem erfindungsgemäßen Verfahren eine Schutzschicht mit einer hohen Pakkungsdichte ≥ 0,95 aufgebracht werden. Weiterbildungen des erfindungsgemäßen Verfahrens bestehen darin, die Schichten des mittels des erfindungsgemäßen Verfahrens hergestellten Bauteiles so auszugestalten, wie dies in Bezug auf das erfindungsgemäße Bauteil in den Unteransprüchen 2 bis 11 angegeben ist.

Das Substrat des erfindungsgemäßen Bauteiles ist entsprechend den jeweiligen Anforderungen innerhalb weiter Grenzen wählbar. Eine andere Weiterbildung der Erfindung sieht insoweit vor, dass das Substrat aus einem Glasmaterial oder einem diamantgedrehten bzw. - gefrästen Aluminium besteht.

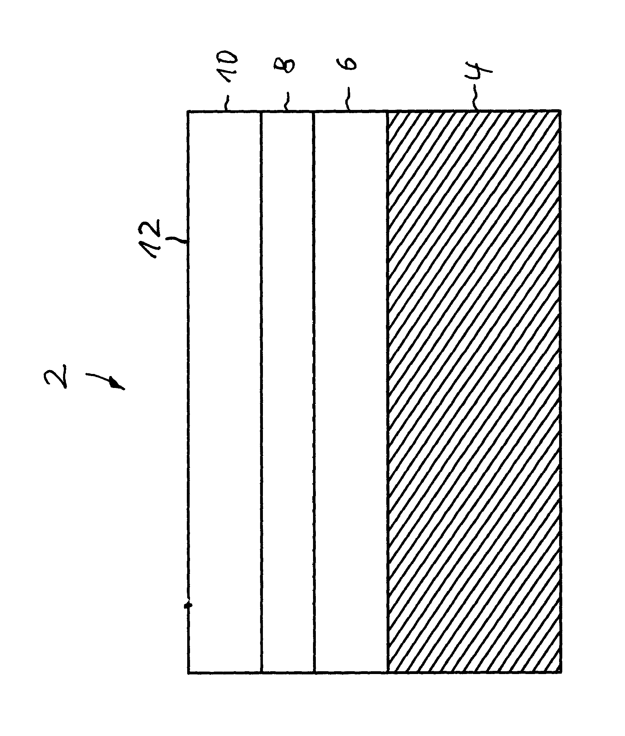

Die Erfindung wird nachfolgend unter Bezugnahme auf die beigefügte Zeichnung näher erläutert, deren einzige Figur stark schematisiert und nicht maßstäblich einen Schnitt durch ein Ausführungsbeispiel eines erfindungsgemäßen reflektierenden optischen Bauteiles zeigt. Dabei bilden alle beschriebenen, in der Zeichnung dargestellten und in den Patentansprüchen beanspruchten Merkmale für sich genommen sowie in beliebiger technisch sinnvoller Kombination miteinander den Gegenstand der Erfindung, unabhängig von ihrer Zusammenfassung in den Patentansprüchen und deren Rückbeziehung sowie unabhängig von ihrer Beschreibung bzw. Darstellung in der Zeichnung.

Die einzige Figur der Zeichnung zeigt einen Schnitt durch ein Ausführungsbeispiel eines erfindungsgemäßen Bauteiles 2, das ein Substrat 4 aufweist, das bei diesem Ausführungsbeispiel aus Glas besteht und eine Dicke aufweist, die entsprechend den gewünschten mechanischen Eigenschaften des Bauteiles 2 gewählt ist. Auf das Substrat 4 ist eine Haftvermittlerschicht 6 aufgebracht, die bei diesem Ausführungsbeispiel aus Cr besteht und eine Schichtdicke von 400 nm aufweist. Die Haftvermittlerschicht 6 ist auf das Substrat 4 aufgedampft. Auf die Haftvermittlerschicht 6 ist eine reflektierende Metallschicht 8 aufgebracht, die bei diesem Ausführungsbeispiel aus Au besteht und eine Schichtdicke von ca. 200 nm hat. Die Metallschicht 8 ist auf die Haftvermittlerschicht 6 aufgedampft. Auf die Metallschicht 8 ist als dielektrische Schutzschicht 10 bei diesem Ausführungsbeispiel eine Schicht aus Y₂O₃ aufgebracht, die bei diesem Ausführungsbeispiel eine Schichtdicke von ca. 150 nm aufweist und mit Plasmastützung auf die Metallschicht 8 aufgedampft ist. Die der Metallschicht 8 abgewandte Fläche der Schutzschicht 12 bildet die freie Oberfläche bzw. Außenfläche des Bauteiles 12, die bei Benutzung des Bauteiles 2 Umwelteinflüssen ausgesetzt ist.

Anstelle einer einzelnen dielektrischen Schutzschicht 10 kann erfindungsgemäß auch ein Schutzschichtsystem vorgesehen sein, das aus wenigstens zwei übereinander angeordneten Einzelschichten aus dielektrischem Material besteht.

Das Bauteil 2 weist gleichzeitig gute Reflexionseigenschaften sowie eine ausgezeichnete Stabilität gegenüber Umwelteinflüssen auf, insbesondere im Hinblick auf die Haftfestigkeit der Metallschicht 8, die Stabilität gegenüber feuchter Wärme, Temperaturwechsel und Wasserlagerung und im Hinblick auf die Kratzfestigkeit.

## Patentansprüche

1. Für einen Wellenlängenbereich von 0,4 - 12 µm ausgelegtes reflektierendes optisches Bauteil (2),
mit einem Substrat,
mit einer die freie Oberfläche des Bauteils (2) bildenden Schutzschicht und
mit einer zwischen dem Substrat und der Schutzschicht angeordneten Metallschicht,
wobei die Metallschicht aus Al und/oder Au und/oder Ag besteht und
wobei die Schutzschicht (10) eine hohe Packungsdichte ≥ 0,95 aufweist.

2. Bauteil nach Anspruch 1, **dadurch gekennzeichnet, dass** die Packungsdichte der Schutzschicht (10) ≥ 0,98 ist.

3. Bauteil nach Anspruch 1 oder 2, **dadurch gekennzeichnet, dass** die Schutzschicht (10) aus dielektrischem Material besteht.

4. Bauteil nach einem der vorhergehenden Ansprüche, **dadurch gekennzeichnet, dass** die Schutzschicht (10) aus oxidischem und/oder fluroridischem Material besteht oder oxidisches und/oder fluoridisches Material enthält.

5. Bauteil nach Anspruch 4, **dadurch gekennzeichnet, dass** das oxidische Material der Schutzschicht (10) CeO₂ und/oder Ce₂O₃ und/oder Cr₂O₃ und/oder Y₂O₃ und/oder Ta₂O₅ und/oder TiO₂ ist.

6. Bauteil nach Anspruch 4 oder 5, **dadurch gekennzeichnet, dass** das fluoridische Material der Schutzschicht (10) YF₃ und/oder LiF und/oder YbF₃ und/oder BaF₂ und/oder LaF₃ ist.

7. Bauteil nach einem der vorhergehenden Ansprüche, **dadurch gekennzeichnet, dass** die Schichtdicke der Schutzschicht (10) oder eines mehrere Einzelschichten aufweisenden Schutzschichtsystems 50-500 nm beträgt.

8. Bauteil nach einem der vorhergehenden Ansprüche, **dadurch gekennzeichnet, dass** zwischen der Metallschicht (8) und dem Substrat wenigstens eine Haftvermittlerschicht (6) angeordnet ist.

9. Bauteil nach Anspruch 8, **dadurch gekennzeichnet, dass** die Haftvermittlerschicht (6) wenigstens ein metallisches und/oder wenigstens ein oxidisches Material enthält oder aus wenigstens einem metallischen und/oder oxidischen Material bzw. Materialien besteht.

10. Bauteil nach Anspruch 9, **dadurch gekennzeichnet, dass** das metallische Material der Haftvermittlerschicht (6) Ni, Cr oder eine Ni-Cr-Mischung ist.

11. Bauteil nach Anspruch 9 oder 10, **dadurch gekennzeichnet, dass** das oxidische Material der Haftvermittlerschicht (6) Chromoxid CrₓO_{y} und/oder MgO und/oder SiO und/oder ZrO₂ und/oder Y₂O₃ ist.

12. Bauteil nach einem der vorhergehenden Ansprüche, **dadurch gekennzeichnet, dass** die Schutzschicht (10) bzw. das Schutzschichtsystem durch Aufdampfen, vorzugsweise mit Plasmastützung durch Ionenplattieren oder durch Sputtern aufgebracht wird.
